(19) Europäisches Patentamt
European Patent Office
Office européen des brevets

(11) **EP 2 207 022 B1**

(12) **EUROPEAN PATENT SPECIFICATION**

(45) Date of publication and mention
of the grant of the patent:
**11.07.2012 Bulletin 2012/28**

(51) Int Cl.:
*G01M 11/02* (2006.01)     *G02B 6/028* (2006.01)

(21) Application number: **09075577.8**

(22) Date of filing: **30.12.2009**

(54) **Method of characterizing a graded multimode optical fibre and a method of fabricating such a fiber**

Kennzeichnungsverfahren und Herstellungsverfahren einer Mehrmodenfaser mit Gradientindex

Procédés de caractérisation et de fabrication d'une fibre optique multimodale à gradient d'indice

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.01.2009 FR 0900050**

(43) Date of publication of application:
**14.07.2010 Bulletin 2010/28**

(60) Divisional application:
**12154138.7 / 2 463 638**

(73) Proprietor: **Draka Comteq B.V.**
**1083 HJ Amsterdam (NL)**

(72) Inventors:
• **Gholami, Asghar**
**84156 Isfahan (IR)**
• **Molin, Denis**
**91210 Draveil (FR)**
• **Sillard, Pierre**
**78150 Le Chesnay (FR)**
• **Lumineau, Yves**
**95220 Herblay (FR)**

(74) Representative: **Rolfes, Johannes Gerardus Albertus et al**
**Algemeen Octrooi en Marken Bureau**
**P.O. Box 645**
**5600 AP Eindhoven (NL)**

(56) References cited:
**US-A- 3 989 350     US-A- 4 473 273**

• **MORIKUNI J ET AL: "Simulation-based prediction of multimode fiber bandwidth for 10 gb/s systems" LEOS 2002. 15TH. ANNUAL MEETING OF THE IEEE LASERS & ELECTRO-OPTICS SOCIETY. GLASCOW, SCOTLAND, NOV. 11 - 12, 2002; [ANNUAL MEETING OF THE IEEE LASERS AND ELECTRO-OPTICS SOCIETY], NEW YORK, NY : IEEE, US, vol. 2, 13 November 2002 (2002-11-13), pages 604-605, XP010622307 ISBN: 978-0-7803-7500-0**
• **YI SUN ET AL.: "Advanced Multimode Fiber for High Speed, Short Reach Interconnect" PROCEEDINGS OF THE SPIE, vol. 7134, 2008, pages 71341L-1-71341L15, XP040444632**
• **PHILLIP D. BELL ET AL.: "Evolution of 50/125 microns Fiber Since the Publication of IEEE 802.3ae" PROCEEDINGS OF THE 52ND IWCS/FOCUS, 2003, pages 60-67, XP040424887**
• **PAUL F. KOLESAR AND DAVID J. MAZZARESE: "Understanding Multimode Bandwidth and Differential Mode Delay Measurements and Their Applications" PROCEEDINGS OF THE 51ST IWCS, 2002, pages 453-460, XP040424759**
• **"FOTP-220 Differential Mode Delay Measurement of Multimode Fiber in the Time Domain;(Revision of TIA/EIA-455-220);TIA-455-220-A" January 2003 (2003-01), , XP017001692pages 1-23, * the whole document ***

## Description

The invention relates to a method of characterizing graded-index multimode optical fibers. The invention also relates to a method of fabricating such fibers, comprising a production step proper and a selection step implementing the fabrication method, and the invention also applies to multimode optical fibers of the kind that can be fabricated by such a method.

Multimode optical fibers are used for short to medium length connections, e.g. for making local networks. Their main advantage is that they make it possible to use relatively inexpensive connectors and light sources (vertical cavity surface-emitting lasers (VCSELs) or even light-emitting diodes (LEDs)), which would not be suitable for use with monomode fibers. In contrast, such fibers present intermode dispersion that greatly reduces their bit rate over lengths greater than a few kilometers, or even a few hundreds of meters, thus preventing them from being used over long distances.

In order to minimize intermode dispersion, the multimode optical fibers used in telecommunications generally comprise the core of refractive index that decreases progressively going from the center of the fiber to its junction with a cladding. In general, the index profile is given by a relationship known as the "α profile", as follows:

$$n(r) = \begin{cases} n_0 \cdot \sqrt{1 - 2\Delta\left(\dfrac{r}{a}\right)^{\alpha}} & r \leq a \\ n_0 \cdot \sqrt{1 - 2\Delta} & r \geq a \end{cases}$$

where:

- $n_0$ is a refractive index on an optical axis of a fiber;
- $r$ is a distance from said optical axis;
- $a$ is a radius of the core of said fiber;
- $\Delta$ is a non-dimensional parameter, indicative of an index difference between the core and a cladding of the fiber; and
- $\alpha$ is a non-dimensional parameter, indicative of a shape of the index profile.

The parameter $\Delta$ is known as the index contrast; and for $\Delta << 1$,

$$n(r \geq a) = n_0 \cdot \left(1 - \sqrt{1 - 2\Delta}\right) \approx \Delta \cdot n_0$$

So-called "α profile" fibers and their method of fabrication are disclosed in document US 3 989 350 (US Patent No. 3,989,350 B1).

Over time, the performance of multimode optical fibers has improved to such an extent as to enable them to be used in very high bit rate connections over distances of several hundreds of meters. By way of example, the "10 gigabit (Gb) Ethernet standard" (10GbE) makes provision for "α profile" fibers to be used over distances less than or equal to 300 meters (m).

It is necessary to take account of the fact that optical fibers as actually fabricated present dispersion for their values of the parameter $\alpha$, so their index profiles do not necessarily comply exactly with the nominal relationship. Unfortunately, transmission properties are very sensitive to variations in index profile. Fabricating graded-index multimode optical fibers thus comprises two stages:

- proper production of the fibers; and
- characterization of the fibers as produced in this way, in order to discard those that do not comply with the specifications.

Specifically, the real index profile of a multimode optical fiber is rarely measured directly. In general, it suffices to measure its intermode dispersion at a predefined wavelength $\lambda_0$. Thus, the above-mentioned 10GbE standard requires an effective modal bandwidth (EMB) that is greater than or equal to 2000 megahertz-kilometers (MHz.km) at a wavelength of 850 nanometers (nm). It is observed that the EMB is not strictly speaking a bandwidth, but rather the product of a bandwidth multiplied by a propagation distance.

The EMB is defined precisely in the standard FOTP-220 (including its information Annexes B and D). Without going into technical detail, for which reference can be made to the standard, the EMB parameter is determined by performing a plurality of individual measurements. Each individual measurement consists of injecting a spatially-localized light pulse into the inlet face of the fiber that is to be characterized, injection being at a predefined radial offset from the axis of the fiber (and thus from the center of the face), and determining the propagation delay of the pulse. A plurality of individual measurements are repeated at different radial offset values. The results of these various individual measurements are combined to determine an effective mode transfer function of the fiber, from which the EMB is determined.

In order to characterize an optical fiber having the core with a diameter of 50 micrometers ($\mu$m), the FOTP-220 standard requires 24 individual measurements to be performed.

Here and below in this application, reference is made more particularly to the document "FOTP-220 differential mode delay measurement of multimode fiber in the time domain" published on January 1, 2003 by the Telecommunications Industry Association (TIA) and identified as information document TIA-455-220-A, which can be purchased on the TIA Internet site (http://www.tiaonline.org/index.cfm) at the following page: http: // standardsdocuments.tiaonline.org/tia- 455-220- a-fotp-22 0.htm

This method known from the prior art serves to determine the performance of the fiber in terms of bandwidth at a single wavelength only (850 nm $\pm$ 10 nm for the 10GbE standard).

If it is desired to discover the performance of a fiber at a plurality of wavelengths, or indeed over an extended range of wavelengths, it is necessary to perform a plurality of independent EMB measurements, i.e. several tens or indeed several hundreds of individual measurement.

As explained above, such measurements need to be taken at the time of fabrication in order to discard fibers that do not present the required characteristics as a result of inevitable fluctuations in their actual index profiles. The requirement to take a large number of individual measurements for each fiber can have a very great influence on the cost thereof.

The invention seeks to provide a method enabling the transmission characteristics of a graded-index multimode optical fiber to be characterized over a range of wavelengths in a manner that is simpler and faster - and therefore less expensive compared to prior art methods. The method is suitable for application during the fabrication of optical fibers of this type.

The inventors have observed that one measurement (or more precisely one series of individual measurements) taken at a single wavelength can be used to characterize the departure of the actual index profile of a multimode optical fiber from the corresponding nominal index profile. This measurement, coupled with intermode dispersion or EMB measurement, makes it possible to predict approximately the transmission properties of the optical fiber at wavelengths other than the measurement wavelength. This assumes that the dispersion of index profiles is not excessive, however such is easily guaranteed by modern fiber production methods.

In one aspect, the method thus provides a method of characterizing a graded-index multimode optical fiber, which method comprises the step of:

a) injecting a light pulse at a predefined wavelength into a core of an optical fiber that is to be characterized via an "inlet" face thereof, said light pulse being injected with a predefined radial offset from a center of said inlet face;

b) detecting said light pulse at an "outlet" face of said optical fiber, a time characteristic of the pulse being modified by propagation along the fiber; and

c) repeating steps a) and b) for a plurality of values for said predefined radial offset; and

d) determining the transfer function of the optical fiber and a radial offset bandwidth (ROB) characterizing said transfer function, as a function of said radial offset.

The measurement steps a) to c) are the same as those required for determining the EMB of the fiber, in a manner that is known per se in the prior art. The same measurements can be used for determining both the ROB and the EMB, so as to perform characterization of the optical fiber more completely.

In particular implementations of the invention:

· Each light pulse may be injected into the optical fiber with a propagation direction that is substantially parallel to the axis of the fiber, and perpendicular to said inlet face.

· Each light pulse may be spatially localized on said inlet face of the optical fiber. In particular, the spatial extent of each light pulse may be substantially equivalent to the extent of the single spatial mode of a monomode optical fiber at said predefined wavelength.

· Said radial offset values may vary over a range of at least 0 to $\underline{a}$, where $\underline{a}$ is the radius of the core of said optical fiber.

· Steps a) to b) may be implemented in compliance with the January 1, 2003 Telecommunications Industry Association standard FOTP-220.

· Said predefined wavelength may be 850 nm $\pm$ 10 nm.

· Said optical fiber may present an index profile given by the relationship:

$$n(r) = \begin{cases} n_0 \cdot \sqrt{1 - 2\Delta \left(\dfrac{r}{a}\right)^{\alpha}} & r \leq a \\ n_0 \cdot \sqrt{1 - 2\Delta} & r \geq a \end{cases}$$

where:

· $n_0$ is the refractive index on the optical axis of the fiber;

· $\underline{r}$ is the distance from said optical axis;

· $\underline{a}$ is the radius of the core of said fiber;

· $\Delta$ is a non-dimensional parameter, indicative of the index difference between the core and the cladding of the fiber; and

· $\alpha$ is a non-dimensional parameter, indicative of the shape of the index profile.

· In particular, the value of the parameter $\alpha$ lies in a range of 2.0 to 2.1, and preferably in the range of 2.04 to 2.06.

· The method of the invention may also comprise an additional step of:

e) determining an effective bandwidth at said predefined wavelength from results of measurements performed in steps a), b), and c).

· The method of the invention also comprises the additional step of:

f1) verifying whether the effective bandwidth determined in step e) lies within a predetermined range of values; and

f2) verifying whether the bandwidth as a function of the radial offset determined in step d) is greater than a predetermined threshold for all values of the radial offset lying in a range of 0 to $R_1$, where $R_1$ is less than or equal to the radius of the core of the optical fiber.

· step f1) consists of verifying whether the effective bandwidth determined in step e) lies in a range of 3000 MHz.km to 6000 MHz.km; and step f2) consists of verifying whether the bandwidth as a function of the radial offset as determined in step d), defined as the -3 dB bandwidth, is greater than or equal to 6000 MHz.km for all radial offsets lying in the range of 0 to $R_1$, $R_1$ lying in a range of 0.7 to 0.9 times the radius of the core of the fiber.

· More particularly:

· steps a) and b) are implemented in compliance with the January 1, 2003 Telecommunications Industry Association standard FOTP-220;

· said predefined wavelength is 850 nm $\pm$ 10 nm;

· said optical fiber presents an index profile given by the relationship:

$$n(r) = \begin{cases} n_0 \cdot \sqrt{1 - 2\Delta\left(\dfrac{r}{a}\right)^{\alpha}} & r \leq a \\ n_0 \cdot \sqrt{1 - 2\Delta} & r \geq a \end{cases}$$

where:

· no is the refractive index on the optical axis of the fiber;

· $r$ is the distance from said optical axis;

· $a$ is the radius of the core of said fiber;

· $\Delta$ is a non-dimensional parameter, indicative of the index difference between the core and the cladding of the fiber;

· $\alpha$ is a non-dimensional parameter, indicative of the shape of the index profile and lying in the range of 2.04 to 2.06;

· said steps a) and b) are implemented in compliance with the January 1, 2003 Telecommunications Industry Association standard FOTP-220; and

· the effective bandwidth determined in step e) is a calculated effective bandwidth determined in compliance with the above-specified standard FOTP-220.

In another aspect, the invention also provides a method of fabricating graded-index multimode optical fibers, the method comprising:

· making multimode optical fiber presenting a nominal index profile, e.g. of the "α type";

· characterizing fibers as made in this way in compliance with the present method as described above; and

· selecting only those fibers for which the effective bandwidth lies in said predetermined range of values and the bandwidth as a function of radial offset is greater than said predetermined threshold for all radial offset values lying in the range 0 to $R_1$.

The graded-index multimode optical fiber presents a refractive index profile given by the relationship:

$$n(r) = \begin{cases} n_0 \cdot \sqrt{1 - 2\Delta\left(\dfrac{r}{a}\right)^{\alpha}} & r \leq a \\ n_0 \cdot \sqrt{1 - 2\Delta} & r \geq a \end{cases}$$

where:

· $n_0$ is the refractive index on the optical axis of the fiber;

· $r$ is the distance from said optical axis;

· $a$ is the radius of the core of said fiber;

· $\Delta$ is a non-dimensional parameter, indicative of the index difference between the core and the cladding of the fiber; and

· $\alpha$ is a non-dimensional parameter, indicative of the shape of the index profile and lying in the range of 2.04 to 2.06;

wherein its -3 dB bandwidth as a function of radial offset from the axis of the fiber, as measured at a wavelength 850 nm, is greater than or equal to 6000 MHz.km for all radial offsets lying in the range of 0 to $R_1$, where $R_1$ lies in the range of 0.7 to 0.9 times the radius of the core of the fiber.

Such a fiber may also comprise an effective bandwidth at a wavelength of 850 nm, as defined in compliance with the January 1, 2003 Telecommunications Industry Association standard FOTP-220, that lies in the range 3000 MHz.km to 6000 MHz.km.

In particular, $R_1 = 18$ $\mu$m and may present the core having a diameter of 50 $\mu$m.

Advantageously, the -3 dB bandwidth, measured at a wavelength of 850 nm and defined as a function of radial offset from the axis of the fiber that is determined by a method as described above.

Other characteristics, details, and advantages of the invention appear on reading the following description made with reference to the accompanying drawings given by way of example and not limiting the scope of protection, and in which:

· Figures 1A to 1D show an inlet face of a graded-indexed multimode optical fiber, an index profile of such a fiber, and the time profiles of a light pulse at the inlet and at an outlet of the fiber, respectively;

· Figure 2 shows the EMB as a function of wavelength for a plurality of optical fibers having a perfect "$\alpha$ type" profile, for various values of the parameter a;

· Figure 3 shows bandwidth as a function of radial offset measured at 850 nm for the optical fibers of Figure 2;

· Figures 4A and 4B show bandwidth as a function of radial offset measured at 850 nm for an actual optical fiber having an index profile that departs from a perfect "$\alpha$ type" profile;

· Figure 5 shows the EMB of the fiber of Figures 4A and 4B; and

· Figure 6 shows dependence of parameter $\alpha$ on the EMB of the Figure 2 fibers at 800 nm, 850 nm, and 1100 nm.

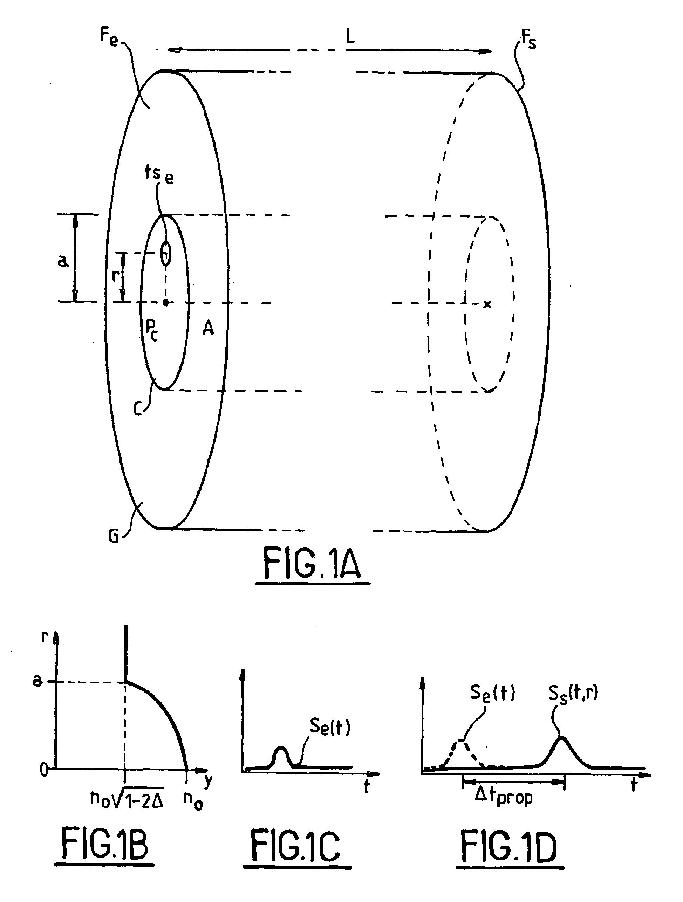

Figure 1A is a diagram of a multimode optical fiber of length L comprising the core C of radius $\underline{a}$, surrounded by cladding G. The fiber has an inlet face $F_e$ and an outlet face $F_s$; these two faces are perpendicular to the optical axis A of the fiber. Said optical axis A passes through the inlet face $F_e$ in correspondence with the center point $P_c$ of the core.

The graph of Figure 1B shows a radial index profile which is of the "$\alpha$ type". In this graph, a value of the parameter $\Delta$ is greatly exaggerated: in reality, $\Delta$ is of the order of 1%.

As explained above, characterizing an optical fiber requires a plurality of individual measurements to be taken. Each individual measurement comprises injecting a spatially-localized light pulse into the core C of the fiber; this injection is performed by projecting a light beam of small dimensions onto the inlet face $F_e$ of the fiber. In Figure 1A, the reference $ts_e$ indicates the spot formed on said inlet face by the light beams.

In accordance with the FOTP-220 standard, the signal injection light beam is obtained by coupling a light source (such as a semiconductor or titanium-sapphire laser) to a monomode optical fiber having its outlet face positioned at a maximum of 10 $\mu$m from the inlet face $F_e$ of the multimode fiber that is to be characterized. The spot $ts_e$ is characterized by a Gaussian distribution of intensity:

$$I(r) = \exp\left[- 8r^2 / MFD^2\right]$$

where the "diameter" MFD is given by:
MFD = 8.7$\lambda$ (in nm) - 2390 nm ($\pm$ 500 nm).
At a wavelength lying in the range 850 nm to 1100 nm, the diameter of spot $ts_e$ thus lies in the range 5.005 $\mu$m

to 7.18 $\mu$m $\pm$ 0.5 $\mu$m. The beam propagates for example in a direction parallel to the axis A of the multimode fiber, with tolerance of the order of 1°.

In general, the spot $ts_e$ is not centered relative to the core of the multimode fiber, but presents a radial offset indicated as $\underline{r}$, as measured from the center point $P_c$. Each individual measurement is performed with a different radial offset $\underline{r}$, having a value lying in the range of 0 to $\underline{a}$ (or even greater than $\underline{a}$), with for example a step size of the order of 1 $\mu$m.

The two graphs of Figures 1C and 1D are diagrams showing the time profile respectively of the pulse $s_e(t)$ as injected at the inlet of the fiber - assumed to be identical for all of the individual measurements, and thus independent of the radial offset $\underline{r}$ - and the profile of the same pulse $s_s(t,r)$ as taken at the outlet. After propagating along the multimode fiber, the outlet pulse is delayed by a time $\Delta t_{prop}$ relative to the inlet pulse; in addition, its time profile is deformed; this delay and this deformation depend on the radial offset r. Given that the pulse presents a narrow spectrum band, it can be assumed that the deformation of its time profile is due essentially to the multimode nature of the propagation, and that chromatic dispersion plays a part that is secondary, or even negligible. If this assumption does not apply, it is possible to eliminate the effect of chromatic dispersion by means of deconvolution (see the FOTP-220 standard, and in particular its Annex A).

The EMBc is calculated from a series of individual measurements, as follows:

· approximating the fielddistribution of a light source usable with the multimode fiber (typically a VCSEL) by a linear combination of spatially-localized beams having different radial offsets $\underline{r}$;

· with appropriate weights, linearly combining different spatially-localized inlet pulses all having the same time profile $s_e(t)$, thereby making it possible to simulate a light pulse injected into the fiber by said light source;

· linearly combining the corresponding outlet pulses $s_s(t,r)$ so as to simulate the outlet pulse that would be obtained by using said light source;

· then determining the transfer function of the fiber or the light source under consideration, with it being possible for this purpose to calculate a ratio between Fourier transforms of the time profiles of the outlet and inlet pulses; and

· deducing the -3 dB bandwidth therefrom (typically the -1.5 dB bandwidth is measured directly and extrapolated to -3 dB).

For further details on this characterization technique, reference can be made to the following publications:

· P.F. Kolesar and D.J. Mazzarese, "Understanding multimode bandwidth and differential mode delay measurements and their applications", Proceedings of the 51st International Wire and Cable Symposium, pages 453-460; and

· D. Coleman and Philip Bell "Calculated EMB enhances 10GbE performance reliability for laser-optimized 50/125 $\mu$m multimode fiber", Corning Cable Systems Whitepaper.

The FOTP-220 standard (and in particular its Annex D) provides linear combination parameters corresponding to a plurality of light sources that are notional, but representative of sources that are genuinely available. The smallest modal bandwidth obtained from these notional sources is taken as the "calculated" EMB (EMBc).

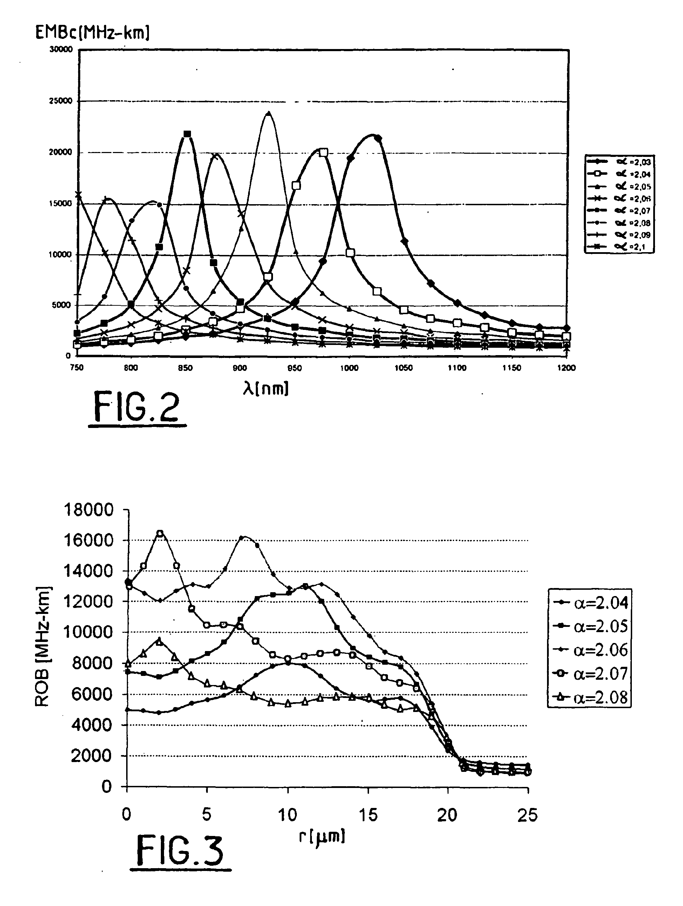

The graph of Figure 2 shows the EMBc of a plurality of optical fibers having different index profiles for wavelengths lying in the range of 800 nm to 1100 nm. The fibers are silica fibers with $n_0$ = 1.47 at 633 nm, and they present perfect "$\alpha$ type" profiles, with a = 25 $\mu$m (core diameter 50 $\mu$m), cladding diameter 125 $\mu$m, $\Delta$ = 0.01, and various values of $\alpha$ lying in the range of 2.04 to 2.08.

All of these fibers present an EMBc at 850 nm that is greater than 2000 MHz.km; consequently, they comply with the 10GbE standard. Nevertheless, amongst the fibers of Figure 2, only the fiber characterized by $\alpha$ = 2.05 presents an EMBc greater than or equal to 2000 MHz.km over the entire spectrum band under consideration (800 nm - 1100 nm).

If actual optical fibers did indeed have perfect "$\alpha$ type" index profiles, it would suffice to determine the EMBc at one or two wavelengths in order to determine $\alpha$ unambiguously, and to deduce therefrom the EMBc at all other wavelengths. However, in reality, the index profiles of actual fibers are not of a perfectly "$\alpha$ type". Consequently, one or two series of individual measurements performed in accordance with the prior art do not suffice to determine EMBc over an extended range of wavelengths.

The invention enables this problem to be solved, at least in part, by making use of information contained in widening and deformation of the time profile of the pulses used for the various individual measurements at the same wavelength $\lambda_0$ (e.g. 850 nm).

Let $S_e(f)$ be the Fourier transform of the time profile of the inlet pulse $s_e(t)$, and $S_s(f,r)$ be the Fourier transform of the time profile of the outlet pulse $s_s(t,r)$ for a radial offset $r$ and where $f$ indicates frequency.

For each radial offset $r$ it is possible to calculate the transfer function:

$$H^r(f) = \frac{S_s(f,r)}{S_e(f)}$$

The -3 dB bandwidth of the transfer function $H^r(f)$ is a function of the radial offset r and is referred to as the radial offset bandwidth (ROB(r)).

The graph of Figure 3 shows the ROB(r) at 850 nm for some of the fibers in Figure 2. It can be seen that ROB(r) depends strongly on the value of the parameter $\alpha$ for values of $r$ lying in the range 0 and a maximum offset $R_1$ that is less than the core radius $\underline{a}$, which in this example is about 18 $\mu$m; beyond that, the value of ROB (r) depends essentially on the core-cladding interface, and is therefore relatively insensitive to the parameter $\alpha$. More generally, and as an indication, $R_1$ may lie in the range 0.7a to 0.9a.

An interesting characteristic of the ROB is its high sensitivity to localized defects in refractive index. Thus, if the fiber presents an ROB having a high value in the range $0 < r < R_1$, it can be considered that its index profile is close to an ideal "$\alpha$ profile" and is sufficiently regular to enable the EMB measurement performed at a wavelength $\lambda_0$ to be extrapolated to other wavelengths $\lambda$. In contrast, if the ROB decreases too quickly on increasing the radial offset $r$, then it is likely that the fiber presents an irregular index profile, making any extrapolation uncertain.

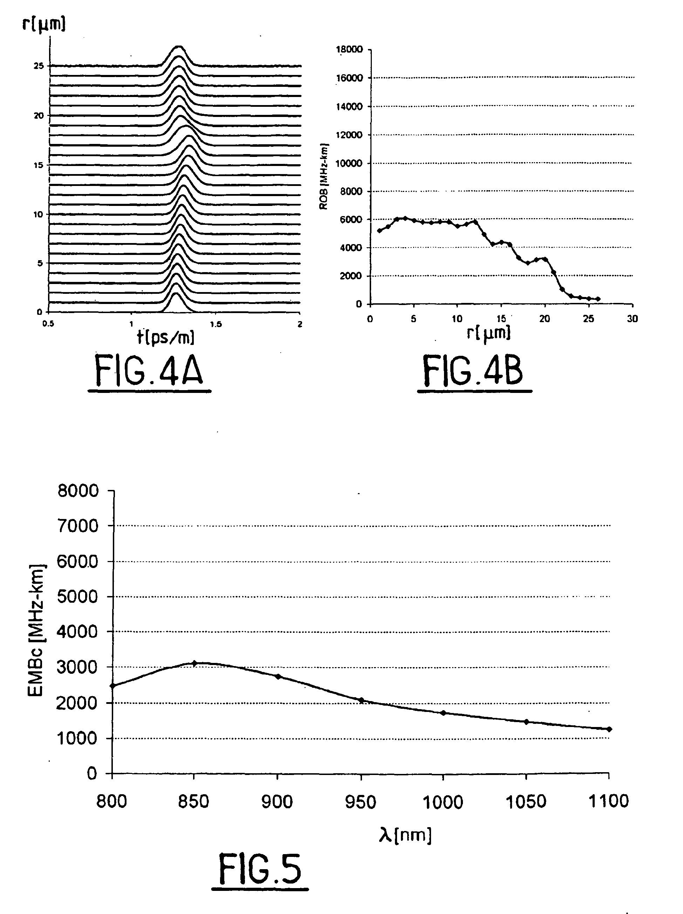

Figure 4A shows graphs of $s_s(t,r)$ for an actual multimode fiber of profile that is not perfectly of the "$\alpha$ type". Figure 4B shows a graph of the corresponding ROB. It can be seen that the ROB remains approximately equal to 6000 MHz.km for $r$ lying in the range 0 to 12 $\mu$m, and then drops rapidly. This makes it possible to deduce that the actual index profile of the fiber departs significantly from the nominal "$\alpha$ type" profile. Measuring EMBc as a function of wavelength $\lambda$ (Figure 5) confirms this result: the fiber satisfies the condition EMBc $\geq$ 2000 MHz.km only in the range 800 nm to 850 nm, and overall it presents transmission properties that are significantly less good than those of a fiber having an ideal "$\alpha$ type" profile.

Nevertheless, in comparison with Figure 2, it can be seen that merely determining EMBc at 850 nm would not have made it possible to distinguish this defective fiber from an "ideal" fiber having $\alpha$ lying in the range of 2.04 to 2.05 (EMBc at 850 nm $\cong$ 3000 MHz.km), which nevertheless has much better broadband transmission properties.

Determining ROB makes it possible not only to identify fibers having an index profile that presents defects. It also helps in discriminating between two "ideal" fibers having $\alpha$ parameters of different values.

Thus, from Figure 2, it can be seen that measuring EMBc at 850 nm only does not make it possible to distinguish between a fiber having $\alpha$ = 2.04 and a fiber having $\alpha$ = 2.09 (EMBc at 850 nm $\cong$ 3500 MHz.km for both values of $\alpha$). However only the first fiber satisfies the specifications of the 10GbE standard (EMBc $\geq$ 2000 MHz.km) over the 800 nm to 1100 nm band. Taking ROB into account makes it very easy to distinguish between these two fibers.

To summarize:

· if ROB drops too fast ("too fast" being a criterion that needs to be defined on a case-by-case basis, as a function of the intended application, requirements thereof and the nominal index profile), it can be considered that the actual index profile departs significantly from the nominal profile, thus making it impossible to extrapolate an EMBc determined at one particular wavelength $\lambda_0$ to other wavelengths;
· if the ROB indicates that the index profile is sufficiently regular, it can serve to distinguish between two fibers characterized by different values for the parameter $\alpha$, even though they have similar values for EMBc at the measurement wavelength $\lambda_0$.

It is important to observe that determining ROB does not require additional measurements to be performed, but makes use only of data already made available by the measurements used for calculating EMBc at a predefined wavelength. ROB is thus an ideal complement to EMBc.

In a specific exemplary application, the EMBc and the ROB at a wavelength of 850 nm can be used to identify fibers presenting EMB ≥ 2000 MHz.km over the entire 800 nm - 1100 nm band. These fibers can be used for wavelength division multiple access (WDMA) applications at very high bit rates (10 Gb/s/channel) over a length of about 300 m.

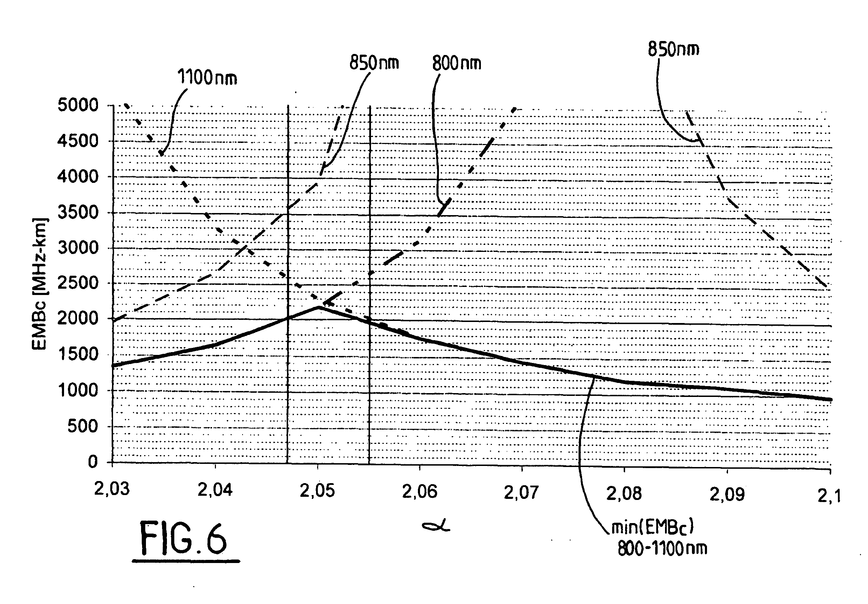

Figures 2 and 6 (see in particular the curve min (EMBc) over 800 nm - 1100 nm representing the minimum value of EMBc as a function of $\alpha$ over the range 800 nm to 1100 nm) show that only a fiber of "$\alpha$ type" with $\alpha \cong 2.05$ satisfies this condition. Such a fiber provides an EMBc of 850 nm that lies in the range 3000 MHz.km to 6000 MHz.km, approximately. However that is not sufficient: fibers with $\alpha \cong 2.09$ also have an EMBc at 850 nm lying in this range, yet nevertheless their modal bandwidth becomes insufficient at wavelengths $\lambda$ greater than 950 nm - 1000 nm.

This ambiguity is removed if an additional condition is taken into account, namely ROB(r) at 850 nm ≥ 6000 MHz.km for r ≤ 18 $\mu$m.

More generally, verifying that EMBc at $\lambda_0$ lies in a determined range of values and that ROB(r) at $\lambda_0$ is greater than a predetermined threshold for r lying in the range of 0 to $R_1 < a$ makes it possible to ensure that the fiber presents an index profile that is sufficiently close to a nominal profile of $\alpha$ type, and to estimate the value of said parameter $\alpha$. This double verification does not require additional measurements to be taken compared with those that are already required for determining EMBc at $\lambda_0$: it can therefore be performed without extra cost even on a fabrication line.

These results can be generalized to nominal profiles other than those of "$\alpha$ type". Therefore the scopee of protection also extents to these profiles.

**Claims**

1. A method of characterizing a graded-index multimode optical fiber, the method comprising the steps of:

   a) injecting a light pulse ($s_e$) at a predefined wavelength into the core (C) of an optical fiber that is to be **characterized**, via an "inlet" face ($F_e$) thereof, said light pulse being injected with a predefined radial offset (r) from the center ($P_c$) of said inlet face;
   b) detecting said light pulse ($s_s$) at an "outlet" face ($F_s$) of said optical fiber, the time characteristic of the pulse being modified by propagation along the fiber; and
   c) repeating steps a) and b) for a plurality of values for said predefined radial offset;

   the method being **characterized in that** it further comprises:

   d) determining the transfer function of the optical fiber and a radial offset bandwidth (ROB) characterizing said transfer function, as a function of said radial offset; wherein said transfer function is defined as the ratio of the Fourier transform of the time profile of the outlet pulse for a given radial offset and the Fourier transform of the time profile of the inlet pulse at a give radial offset and wherein the radial offset bandwith is defined as the -3 dB bandwidth of said transfer function.

   further comprising the steps of:

   e) determining an effective bandwidth at said predefined wavelength from results of measurements performed in steps a), b), and c); and
   f1) verifying whether the effective bandwidth determined in step e) lies within a predetermined range of values, preferably in a range 3000 MHz.km to 6000 MHz.km; and
   f2) verifying whether the bandwidth as a function of the radial offset determined in step d) is greater than a predetermined threshold for all values of the radial offset lying in a range 0 to $R_1$, where $R_1$ is less than or equal to the radius of the core of the optical fiber, preferably is greater than or equal to 6000 MHz.km for all radial offsets lying in the range 0 to $R_1$, $R_1$ lying in a range 0.7 to 0.9 times the radius of the core of the fiber.

2. A method according to claim 1, wherein each light pulse is injected into the optical fiber with a propagation direction that is substantially parallel to an axis (A) of the fiber, and perpendicular to said inlet face.

3. A method according to claim 1 or claim 2, wherein each light pulse is spatially localized on said inlet face of the optical fiber.

4. A method according to claim 3, wherein a spatial extent of each light pulse is substantially equivalent to an extent of a single spatial mode of a monomode optical fiber at said predefined wavelength, and/or wherein said radial offset values vary over a range of at least 0 to $\underline{a}$, where $\underline{a}$ is the radius of the core of said optical fiber.

5. A method according to any preceding claim, wherein steps a) and b) are implemented in compliance with the January 1, 2003 Telecommunications Industry Association standard FOTP-220.

6. A method according to any preceding claim, wherein said predefined wavelength is 850 nm $\pm$ 10 nm.

7. A method according to any preceding claim, wherein said optical fiber presents an index profile given by the relationship:

$$n(r) = \begin{cases} n_0 \cdot \sqrt{1 - 2\Delta\left(\dfrac{r}{a}\right)^\alpha} & r \le a \\ n_0 \cdot \sqrt{1 - 2\Delta} & r \ge a \end{cases}$$

where:

· $n_0$ is a refractive index on an optical axis of the fiber;
· r is a distance from said optical axis;
· $\underline{a}$ is a radius of the core of said fiber;
· $\Delta$ is a non-dimensional parameter, indicative of the index difference between the core and a cladding of the fiber; and
· $\alpha$ is a non-dimensional parameter, indicative of a shape of the index profile.

8. A method according to claim 7, wherein a value of the parameter $\alpha$ lies in a range 2.0 to 2.1, preferably in the range 2.04 to 2.06.

9. A method according to any of the preceding claims, wherein:

· steps a) and b) are implemented in compliance with the January 1, 2003 Telecommunications Industry Association standard FOTP-220;
· said predefined wavelength is 850 nm $\pm$ 10 nm;
· said optical fiber presents an index profile given by the relationship:

$$n(r) = \begin{cases} n_0 \cdot \sqrt{1 - 2\Delta\left(\dfrac{r}{a}\right)^\alpha} & r \le a \\ n_0 \cdot \sqrt{1 - 2\Delta} & r \ge a \end{cases}$$

where:

· $n_0$ is the refractive index on the optical axis of the fiber;
· $\underline{r}$ is the distance from said optical axis;
· $\underline{a}$ is the radius of the core of said fiber;
· $\Delta$ is a non-dimensional parameter, indicative of the index difference between the core and the cladding of the fiber;
· $\alpha$ is a non-dimensional parameter, indicative of the shape of the index profile and lying in the range 2.04 to 2.06;
· said steps a) and b) are implemented in compliance with the January 1, 2003 Telecommunications Industry Association standard FOTP-220; and
· the effective bandwidth determined in step e) is a calculated effective bandwidth determined in compliance with the above-specified standard FOTP-220.

10. A method of fabricating graded-index multimode optical fibers, the method comprising:

· making multimode optical fiber presenting a nominal index profile;
· characterizing fibers as made in this way in compliance with any one of claims 1-9; and
· electing only those fibers for which the effective bandwidth lies in said predetermined range of values and the bandwidth as a function of radial offset is greater than said predetermined threshold for all radial offset values lying in the range 0 to $R_1$.

**Patentansprüche**

1. Verfahren zur Kennzeichnung einer Multimode-Gradientenlichtleitfaser, wobei das Verfahren die folgenden Schritte umfasst:

a) ein Lichtimpuls ($s_e$) wird bei einer vordefinierten Wellenlänge in den Kern (C) einer zu kennzeichnenden Lichtleitfaser über eine "Einlass"fläche ($F_e$) derselben eingekoppelt, wobei der Lichtimpuls mit einem vordefinierten Radialversatz ($\underline{r}$) vom Mittelpunkt ($P_c$) der Einlassfläche eingekoppelt wird,
b) der Lichtimpuls ($s_s$) wird an einer "Auslass"flä-

che ($F_s$) der Lichtleitfaser erfasst, wobei die Zeitcharakteristik des Impulses durch Fortpflanzung längs der Faser modifiziert wird, und

c) die Schritte a) und b) werden für mehrere Werte des vordefinierten Radialversatzes wiederholt,

wobei das Verfahren **dadurch gekennzeichnet ist, dass** es ferner Folgendes umfasst:

d) die Übertragungsfunktion der Lichtleitfaser und eine die Übertragungsfunktion kennzeichnende Radialversatzbandbreite (ROB) werden in Abhängigkeit vom Radialversatz bestimmt, wobei die Übertragungsfunktion als Verhältnis der Fourier-Transformation des Zeitprofils des Auslassimpulses für einen gegebenen Radialversatz und der Fourier-Transformation des Zeitprofils des Einlassimpulses bei einem gegebenen Radialversatz definiert ist und wobei die Radialversatzbandbreite als -3 dB-Bandbreite der Übertragungsfunktion definiert ist,

ferner mit den folgenden Schritten:

e) eine Nutzbandbreite bei der vordefinierten Wellenlänge wird aus Ergebnissen von in den Schritten a), b) und c) ausgeführten Messungen bestimmt, und

f1) es wird überprüft, ob die in Schritt e) bestimmte Nutzbandbreite innerhalb eines vorbestimmten Wertebereichs liegt, vorzugsweise in einem Bereich von 3000 MHz·km bis 6000 MHz·km, und

f2) es wird überprüft, ob die Bandbreite in Abhängigkeit von dem in Schritt d) bestimmten Radialversatz größer als ein vorbestimmter Schwellwert für alle Werte des Radialversatzes ist, die in einem Bereich von 0 bis $R_1$ liegen, worin $R_1$ kleiner oder gleich dem Radius des Kerns der Lichtleitfaser ist, vorzugsweise größer oder gleich 6000 MHz·km für alle Radialversätze ist, die im Bereich von 0 bis $R_1$ liegen, wobei $R_1$ in einem Bereich des 0,7- bis 0,9-Fachen des Radius des Kerns der Faser liegt.

2. Verfahren nach Anspruch 1, bei dem jeder Lichtimpuls mit einer Fortpflanzungsrichtung in die Lichtleitfaser eingekoppelt wird, die im Wesentlichen parallel zu einer Achse (A) der Faser und senkrecht zur Einlassfläche ist.

3. Verfahren nach Anspruch 1 oder Anspruch 2, bei dem jeder Lichtimpuls auf der Einlassfläche der Lichtleitfaser räumlich festgelegt wird.

4. Verfahren nach Anspruch 3, bei dem eine räumliche Ausdehnung jedes Lichtimpulses im Wesentlichen gleichwertig mit einer Ausdehnung eines räumlichen Einzelmodus einer Monomode-Lichtleittaser bei der vordefinierten Wellenlänge ist und/oder bei dem die Werte des Radialversatzes über einen Bereich von wenigstens 0 bis a variieren, worin a der Radius des Kerns der Lichtleitfaser ist.

5. Verfahren nach einem vorhergehenden Anspruch, bei dem die Schritte a) und b) gemäß der Norm FOTP-220 der Vereinigung der Telekommunikationsindustrie vom 1. Januar 2003 durchgeführt werden.

6. Verfahren nach einem vorhergehenden Anspruch, bei dem die vordefinierte Wellenlänge 850 nm ± 10 nm beträgt.

7. Verfahren nach einem vorhergehenden Anspruch, bei dem die Lichtleitfaser ein Indexprofil aufweist, das durch die folgende Gleichung gegeben ist:

$$n(r) = \begin{cases} n_0 \cdot \sqrt{1 - 2\Delta\left(\dfrac{r}{a}\right)^{\alpha}} & r \leq a \\ n_0 \cdot \sqrt{1 - 2\Delta} & r \geq a \end{cases}$$

worin:

· $n_0$ ein Brechungsindex an einer optischen Achse der Faser ist,
· $r$ ein Abstand von der optischen Achse ist,
· $a$ ein Radius des Kerns der Faser ist,
· $\Delta$ ein dimensionsloser Parameter ist, der die Indexdifferenz zwischen dem Kern und einem Mantel der Faser angibt, und
· $\alpha$ ein dimensionsloser Parameter ist, der eine Form des Indexprofils angibt.

8. Verfahren nach Anspruch 7, bei dem ein Wert des Parameters $\alpha$ in einem Bereich von 2,0 bis 2,1, vorzugsweise im Bereich von 2,04 bis 2,06 liegt.

9. Verfahren nach einem der vorhergehenden Ansprüche, bei dem:

· die Schritte a) und b) gemäß der Norm FOTP-220 der Vereinigung der Telekommunikationsindustrie vom 1. Januar 2003 durchgeführt werden,
· die vordefinierte Wellenlänge 850 nm ± 10 nm beträgt,
· die Lichtleitfaser ein Indexprofil aufweist, das durch die folgende Gleichung gegeben ist:

$$n(r) = \begin{cases} n_0 \cdot \sqrt{1 - 2\Delta\left(\dfrac{r}{a}\right)^{\alpha}} & r \le a \\[2mm] n_0 \cdot \sqrt{1 - 2\Delta} & r \ge a \end{cases}$$

worin:

· $n_0$ der Brechungsindex an der optischen Achse der Faser ist,
· $\underline{r}$ der Abstand von der optischen Achse ist,
· $\underline{a}$ der Radius des Kerns der Faser ist,
· $\Delta$ ein dimensionsloser Parameter ist, der die Indexdifferenz zwischen dem Kern und dem Mantel der Faser angibt,
· $\alpha$ ein dimensionsloser Parameter ist, der die Form des Indexprofils angibt und im Bereich von 2,04 bis 2,06 liegt,
· die Schritte a) und b) gemäß der Norm FOTP-220 der Vereinigung der Telekommunikationsindustrie vom 1. Januar 2003 durchgeführt werden, und
· die in Schritt e) bestimmte Nutzbandbreite eine berechnete Nutzbandbreite ist, die gemäß der oben angegebenen Norm FOTP-220 bestimmt wird.

10. Verfahren zur Herstellung von Multimode-Gradientenlichtleitfasern, wobei das Verfahren Folgendes umfasst:

· eine Multimode-Lichtleitfaser wird erzeugt, die ein Nennindexprofil aufweist,
· auf diese Weise erzeugte Fasern werden gemäß einem der Ansprüche 1 bis 9 **gekennzeichnet**, und
· nur diejenigen Fasern werden ausgewählt, für die die Nutzbandbreite in dem vorbestimmten Wertebereich liegt und die Bandbreite in Abhängigkeit vom Radialversatz größer als der vorbestimmte Schwellwert für alle Werte des Radialversatzes ist, die im Bereich von 0 bis $R_1$ liegen.

**Revendications**

1. Procédé de caractérisation d'une fibre optique multimode à gradient d'indice, le procédé comprenant les étapes consistant à :

a) injecter une impulsion lumineuse ($s_e$) à une longueur d'onde prédéfinie dans le coeur (C) d'une fibre optique qui doit être **caractérisée**, via une face « d'entrée » ($F_e$) de celle-ci, ladite impulsion lumineuse étant injectée avec un décalage radial prédéfini ($\underline{r}$) depuis le centre ($P_c$)

de ladite face d'entrée ;
b) détecter ladite impulsion lumineuse ($S_s$) à une face de « sortie » ($F_s$) de ladite fibre optique, la caractéristique de temps de l'impulsion étant modifiée par propagation le long de la fibre ; et
c) répéter les étapes a) et b) pour une pluralité de valeurs pour ledit décalage radial prédéfini ;

le procédé étant **caractérisé en ce qu'**il comprend en outre :

d) la détermination de la fonction de transfert de la fibre optique et une bande passante de décalage radial (ROB) caractérisant ladite fonction de transfert, comme une fonction dudit décalage radial ; dans lequel ladite fonction de transfert est définie comme le rapport entre la transformée de Fourier du profil de temps de l'impulsion de sortie pour un décalage radial donné et la transformée de Fourier du profil de temps de l'impulsion d'entrée à un décalage radial donné et dans lequel la bande passante de décalage radial est définie comme la bande passante -3 dB de ladite fonction de transfert ;

comprenant en outre les étapes consistant à :

e) déterminer une bande passante effective à ladite longueur d'onde prédéfinie à partir de résultats de mesures réalisées aux étapes a), b) et c) ; et
f1) vérifier si la bande passante effective déterminée à l'étape e) se situe dans une plage de valeurs prédéterminée, de préférence dans une plage de 3 000 MHz.km à 6 000 MHz.km ; et
f2) vérifier si la bande passante en tant que fonction du décalage radial déterminée à l'étape d) est supérieure à un seuil prédéterminé pour toutes les valeurs du décalage radial se situant dans une plage de 0 à $R_1$, où $R_1$ est inférieur ou égal au rayon du coeur de la fibre optique, de préférence est supérieur ou égal à 6 000 MHz.km pour tous les décalages radiaux se situant dans la plage de 0 à $R_1$, $R_1$ se situant dans une plage de 0,7 à 0,9 fois le rayon du coeur de la fibre.

2. Procédé selon la revendication 1, dans lequel chaque impulsion lumineuse est injectée dans la fibre optique avec une direction de propagation qui est sensiblement parallèle à un axe (A) de la fibre, et perpendiculaire à ladite face d'entrée.

3. Procédé selon la revendication 1 ou la revendication 2, dans lequel chaque impulsion lumineuse est localisée spatialement sur ladite face d'entrée de la fibre optique.

**4.** Procédé selon la revendication 3, dans lequel une étendue spatiale de chaque impulsion lumineuse est sensiblement équivalente à une étendue d'un mode spatial unique d'une fibre optique monomode à ladite longueur d'onde prédéfinie, et/ou dans lequel lesdites valeurs de décalage radial varient sur une plage d'au moins 0 à $\underline{a}$, où $\underline{a}$ est le rayon du coeur de ladite fibre optique.

**5.** Procédé selon l'une quelconque des revendications précédentes, dans lequel les étapes a) et b) sont mises en oeuvre en conformité avec la norme FOTP-220 de l'Association des industries des télécommunications du 1er janvier 2003.

**6.** Procédé selon l'une quelconque des revendications précédentes, dans lequel ladite longueur d'onde prédéfinie est de 850 nm $\pm$ 10 nm.

**7.** Procédé selon l'une quelconque des revendications précédentes, dans lequel ladite fibre optique présente un profil d'indice donné par la relation :

$$n(r) = \begin{cases} n_0 \cdot \sqrt{1 - 2\Delta\left(\frac{r}{a}\right)^{\alpha}} & r \leq a \\ n_0 \cdot \sqrt{1 - 2\Delta} & r \geq a \end{cases}$$

où :

- $n_0$ est un indice de réfraction sur l'axe optique de la fibre ;
- $\underline{r}$ est une distance depuis ledit axe optique ;
- $\underline{a}$ est un rayon du coeur de ladite fibre ;
- $\Delta$ est un paramètre non dimensionnel, indiquant la différence d'indice entre le coeur et une gaine de la fibre ; et
- $\alpha$ est un paramètre non dimensionnel, indiquant une forme du profil d'indice.

**8.** Procédé selon la revendication 7, dans lequel une valeur du paramètre $\alpha$ se situe dans une plage de 2,0 à 2,1, de préférence dans la plage de 2,04 à 2,06.

**9.** Procédé selon l'une quelconque des revendications précédentes, dans lequel :

- les étapes a) et b) sont mises en oeuvre en conformité avec la norme FOTP-220 de l'Association des industries des télécommunications du 1er janvier 2003 ;
- ladite longueur d'onde prédéfinie est de 850 nm $\pm$ 10 nm ;
- ladite fibre optique présente un profil d'indice donné par la relation :

$$n(r) = \begin{cases} n_0 \cdot \sqrt{1 - 2\Delta\left(\frac{r}{a}\right)^{\alpha}} & r \leq a \\ n_0 \cdot \sqrt{1 - 2\Delta} & r \geq a \end{cases}$$

où :

- $n_0$ est l'indice de réfraction sur l'axe optique de la fibre ;
- $\underline{r}$ est la distance depuis ledit axe optique ;
- $\underline{a}$ est le rayon du coeur de ladite fibre ;
- $\Delta$ est un paramètre non dimensionnel, indiquant la différence d'indice entre le coeur et la gaine de la fibre ; et
- $\alpha$ est un paramètre non dimensionnel, indiquant la forme du profil d'indice et se situant dans la plage de 2,04 à 2,06 ;
- les étapes a) et b) sont mises en oeuvre en conformité avec la norme FOTP-220 de l'Association des industries des télécommunications du 1er janvier 2003 ; et
- la bande passante effective déterminée à l'étape e) est une bande passante effective calculée déterminée en conformité avec la norme FOTP-220 mentionnée ci-dessus.

**10.** Procédé de fabrication de fibres optiques multimodes à gradient d'indice, le procédé comprenant :

- la réalisation d'une fibre optique multimode présentant un profil d'indice nominal ;
- la caractérisation des fibres réalisées de cette façon en conformité avec l'une quelconque des revendications 1 à 9 ; et
- la sélection uniquement de ces fibres pour lesquelles la bande passante effective se situe dans ladite plage prédéterminée de valeurs et la bande passante comme une fonction de décalage radial est supérieure audit seuil prédéterminé pour toutes les valeurs de décalage radial se situant dans la plage de 0 à $R_1$.

## FIG.1A

## FIG.1B

## FIG.1C

## FIG.1D

FIG.2

FIG.3

EP 2 207 022 B1

FIG.4A

FIG.4B

FIG.5

14

FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3989350 A

- US 3989350 B1

**Non-patent literature cited in the description**

- FOTP-220 differential mode delay measurement of multimode fiber in the time domain. the Telecommunications Industry Association, 01 January 2003
- **P.F. Kolesar ; D.J. Mazzarese.** Understanding multimode bandwidth and differential mode delay measurements and their applications. *Proceedings of the 51st International Wire and Cable Symposium,* 453-460

- **D. Coleman ; Philip Bell.** Calculated EMB enhances 10GbE performance reliability for laser-optimized 50/125 μm multimode fiber. *Corning Cable Systems Whitepaper*